# EUROPÄISCHE PATENTSCHRIFT

(11) **EP 1 008 145 B1**
(45) Veröffentlichungstag und Bekanntmachung des Hinweises auf die Patenterteilung: **31.05.2006**
(21) Anmeldenummer: 98951316.3
(22) Anmeldetag: 26.08.1998
(51) Int. Cl.: G21C 17/00, G01R 31/00, G21C 15/00

(54) **VERFAHREN ZUR ZERSTÖRUNGSFREIEN PRÜFUNG DER STÖRFALLFESTIGKEIT EINER ELEKTRISCHEN KOMPONENTE EINER KERNKRAFTANLAGE**
METHOD FOR A NON-DESTRUCTIVE TEST OF THE RESISTANCE TO FAILURE OF AN ELECTRONIC COMPONENT OF A NUCLEAR POWER PLANT
PROCEDE POUR LE CONTROLE NON DESTRUCTIF DE LA RESISTANCE AUX INCIDENTS D'UN COMPOSANT ELECTRIQUE D'UNE CENTRALE NUCLEAIRE

(30) Priorität: 27.08.1997 DE 19737404
(43) Veröffentlichungstag der Anmeldung: 14.06.2000
(73) Patentinhaber: Framatome ANP GmbH, 91058 Erlangen (DE)
(72) Erfinder: MICHEL, Wolfgang, D-91056 Erlangen (DE); WABER, Peter, D-91325 Adelsdorf (DE)
(74) Vertreter: Tergau & Pohl Patentanwälte
(86) Internationale Anmeldenummer: PCT/EP1998/005411
(87) Internationale Veröffentlichungsnummer: WO 1999/010894

(56) Entgegenhaltungen:
- EP-A1- 0 517 238
- EP-A2- 0 312 247
- CH-A5- 651 955
- DE-A1- 3 238 522
- US-A- 4 318 778

## Beschreibung

Die Erfindung betrifft ein Verfahren zur zerstörungsfreien Prüfung einer elektrischen Komponente einer Kernkraftanlage, wobei die Störfallfestigkeit der Komponente, die insbesondere unter den Bedingungen eines Störfalls mit Austritt von Kühlmittel noch funktionsfähig bleiben muß, geprüft wird.

Im Falle eines Störfalls mit Austritt von Kühlmittel, des sogenannten Kühlmittelverluststörfalls (KMV-Störfall), kommt es im allgemeinen zu einer Erhöhung des Druckes und der Temperatur, verbunden mit einer starken Dampfproduktion (KMV-störfallspezifische Umgebungsbedingungen). Das daraufhin anfallende Kondensat benetzt die mit Dampf beaufschlagten Gebäudeteile und Komponenten, insbesondere elektrische Systeme, Kabelleitungen und Komponenten der Leittechnik, mit einem feuchten Film. Wenn eine dieser Komponenten durch die Erhöhung der Temperatur, des Druckes sowie des Eindiffundierens des. Dampfes in ihrer Funktionsfähigkeit eingeschränkt oder zerstört wird, z.B. weil sie ihren Isolationswiderstand verliert, so kann dies dazu führen, daß die zur Beherrschung des Störfalls notwendigen Maßnahmen erschwert werden.

Um solche Schäden zu vermeiden, werden alle Komponenten einer Kernkraftanlage, die im Falle eines KMV-Störfalls mit den genannten KMV-störfallspezifischen Umgebungsbedingungen belastet sein können, so gebaut, daß sie durch diese bei Störfallbedingungen in ihrer Funktionalität nicht eingeschränkt werden. Hierzu sind diese Komponenten beispielsweise verkapselt oder vergossen oder mit temperatur- und dampfstabilen Materialien ausgeführt und demzufolge störfallfest (sogenannte KMV-Festigkeit).

Da Isolationswerkstoffe in der Regel altern und sich somit die Störfallfestigkeit während der Lebensdauer der Komponente, insbesondere durch Strahlung und durch die auf sie einwirkenden Betriebsbedingungen, verringern kann, wird die Störfallfestigkeit betreffender Komponenten mit geeigneten Verfahren überprüft.

Dazu werden die Komponenten unter störfallnahen Bedingungen geprüft, d.h. während der Prüfung wird die Belastung der Komponente oder einer äquivalenten Probe durch Feuchte, Temperatur und Druck simuliert. Anhand von vor, während und nach der Prüfung erfaßten elektrischen Parametern, wie z.B. das Verhalten in hochfrequenten Wechselfeldern, die Kapazität, der Isolationswiderstand, die Ausbildung und Dämpfung von Wirbelströmen, wird ein für die Funktionsfähigkeit der Komponente relevanter Parameter bestimmt. Dabei wird (je nach Einsatzart der Komponente) diese ausgebaut, so daß der Betrieb der Kernkraftanlage unterbrochen ist.

Darüber hinaus kann es durch die besonders hohen Prüfbelastungen der Komponente zu deren Zerstörung kommen. Derartige Prüfungen, die aufgrund der besonders hohen Sicherheitsanforderungen an Kernkraftanlagen regelmäßig wiederholt werden, sind demzufolge besonders kostenintensiv und erfordern einen besonders hohen Zeitaufwand.

Aufgrund der betriebsbedingten Alterung der in der Anlage eingesetzten Komponente wird üblicherweise die Komponente oder ein äquivalenter Prüfling vor der eigentlichen Prüfung einem sogenannten Voralterungsprozeß unterzogen. Dieser Voralterungsprozeß entspricht den auf die Komponente einwirkenden Umgebungsbedingungen während des gesamten Betriebseinsatzes der Komponente, in der Regel 40 Jahre. Dazu wird die Komponente oder der Prüfling thermisch und radiologisch belastet. Aus Kosten- und Zeitgründen erfolgt dieser Voralterungs- oder Belastungsprozeß beschleunigt, indem die Komponente höheren Temperaturen und höheren Dosisleistungen, als die während des Betriebes der Anlage auftretenden Temperaturen und Dosisleistungen, ausgesetzt wird. Nachteilig dabei ist jedoch, daß aufgrund von Energieeffekten und auftretenden Dosisleistungseffekten sowie Extrapolationsgrenzen die Bestimmung der Funktionsfähigkeit der Komponente ungenau ist, so daß die Prüfung wiederkehrend durchgeführt werden muß.

Aus der EP-A-0 312 247 ist es bekannt, die Einsatzzeit einer Komponente in einer Kernkraftanlage zu überwachen, wobei eine durch Qualifizierung belegte mögliche Einsatzzeit dann verlängert werden kann, wenn die bis dahin tatsächlich erreichte Belastung der Komponente erheblich geringer ist, als die bei der Qualifizierung angenommene Belastung. Zur Ermittlung der Belastung werden die integrale Strahlenbelastung und die Temperatur beim Betrieb der Komponente in der Kernkraftanlage erfaßt. Darüber hinaus können an einer zur Komponente äquivalenten Probe Parameter, wie der Isolationswiderstand oder Materialkenngrößen, erfaßt werden. Um den Zeitvorlauf zum Zeitpunkt des Einsatzes der die Strahlung und Temperatur erfassenden Einrichtungen sowie der Probe zu berücksichtigen und gegebenenfalls Störfallbelastungen abzudecken, können die Einrichtungen und die Probe vorgealtert werden. Eine Aussage über die Störfallfestigkeit der Komponente, d.h. ob zum aktuellen Zeitpunkt die Komponente im Falle des Auftretens eines Störfalles ihre Funktionsfähigkeit beibehält oder verliert, wird nicht erhalten.

Aus der EP-A-0 517 238 ist es bekannt, die Restlebenszeit einer Komponente in einer Kernkraftanlage dadurch zu ermitteln, daß vorab anhand von zu der Komponente äquivalenten Proben die Korrelationen zwischen physikalischen Eigenschaften der Proben und Zeiten, während derer die Proben unterschiedlichen Strahlungsbelastungen ausgesetzt sind, ermittelt werden. Sobald es zu instabilen Rißbildungen im Material der Komponente kommt, liegt eine kritische Bestrahlungsdauer vor.

Anschließend wird beim Betrieb der Komponente in der Kernkraftanlage eine physikalische Eigenschaft der Komponente erfaßt und über die zuvor ermittelte Korrelation eine Bestrahlungsdauer der Komponente ermittelt, wobei die Differenz zwischen dieser Bestrahlungsdauer und der kritischen Bestrahlungsdauer wie Restlebenszeit der Komponente angibt. Auch hier wird keine Aussage über die Störfallfestigkeit der Komponente erhalten.

Der Erfindung liegt daher die Aufgabe zugrunde, ein Verfahren zur zerstörungsfreien Prüfung einer Komponente anzugeben, das in besonders einfacher Art und Weise den Nachweis der Störfallfestigkeit der Komponente, insbesondere einer elektrischen oder leittechnischen Komponente einer Kernkraftanlage, ermöglicht.

Diese Aufgabe wird durch das in Anspruch 1 angegebene Verfahren gelöst.

Vorteilhafte Weiterbildungen des erfindungsgemäßen Verfahrens sind in den Unteransprüchen angegeben.

Die Erfindung geht dabei von der Überlegung aus, daß die Prüfung der Störfallfestigkeit der Komponente ohne deren Ausbau, insbesondere ohne deren Zerstörung, und während des laufenden Betriebes ermöglicht sein sollte. Dazu sollte ein derartiges Verfahren verwendet werden, das regelmäßig aufeinander folgende Prüfungen von sich im Laufe der Zeit veränderbaren Eigenschaften und entsprechenden Kenngrößen der Komponente unter betriebsnahen Bedingungen ermöglicht.
Als einfachste und aussagekräftigste Maßnahme kann eine Prüfung, die die Verfolgung des Alterungszustandes ermöglicht, vorgenommen werden. Insbesondere eignet sich für die Abbildung des Alterungszustandes der Komponente unter normalen betrieblichen Bedingungen eine Kenngröße, die ein monotones Verhalten bezüglich der betrieblichen Belastungen zeigt sowie auf singuläre Belastungen, z.B. auf Belastungen während einer KMV-Störfallsimulation, reagiert.

Besonders vorteilhaft wird die Kenngröße während des normalen Betriebes der Kernkraftanlage erfaßt. Zweckmäßigerweise wird die Kenngröße auf das Über- oder Unterschreiten eines Grenzwertes überwacht, bis zu welchem die Komponente noch funktionsfähig ist. Beim Verlassen des Toleranzbereichs der Kenngröße wird unter störfallnahen Bedingungen ein Parameter bestimmt, der zum Nachweis der Störfallfestigkeit dient.

Die Kenngröße kann an der beim Betrieb verwendeten Komponente selbst erfaßt werden; alternativ dazu kann anstelle der Komponente eine äquivalente Probe verwendet werden, wobei dann unter betriebsnahen Bedingungen für diese Probe mindestens eine Kenngröße bestimmt wird, die mit einem unter störfallnahen Bedingungen ermittelten Parameter korreliert.

Vorzugsweise wird als Parameter ein für die Funktionsfähigkeit der Komponente oder Probe relevanter Funktionsparameter ermittelt. Soll die Komponente auch noch benutzt werden, obwohl die Kenngröße den Toleranzbereich verlassen hat, so kann vorzugsweise für den Nachweis des Erhaltes der Störfallfestigkeit der Funktionsparameter, unter den Bedingungen des Störfalls, insbesondere eines Kühlmittelverluststörfalls, ermittelt werden.

Dabei wird die Kenngröße auf die Einhaltung des Grenzwertes überwacht. Die Kenngröße wird also bis zu jenem Grenzwert verfolgt, bis zu welchem der zugehörige korrelierte Wert des Funktionsparameters noch zuverlässig eine funktionsfähige Komponente ausweist. Eine derartige Überwachung der Kenngröße ist während des laufenden Betriebes möglich. Daher kann die Komponente im betriebsfertigen Zustand ohne Zerstörung oder Ausbau auf ihre Funktionsfähigkeit überwacht werden. Bedingt durch die Korrelation zwischen der Kenngröße und dem Funktionsparameter braucht zunächst gar nicht der Funktionsparameter selbst ermittelt zu werden und die Komponente muß auch nicht einer Störfallsimulation unterworfen werden. Vielmehr genügt es, statt des Funktionsparameters nur die Kenngröße zu überwachen. Der Funktionsparameter braucht erst dann (gegebenenfalls in einer Störfallsimulation) bestimmt zu werden, wenn die Kenngröße den Grenzwert erreicht (oder überschritten bzw. unterschritten) hat. Vorzugsweise wird dann die Komponente nur noch einmal einer Störfallsimulation ausgesetzt. Alternativ zur Ermittlung des Funktionsparameters kann die Komponente ausgetauscht oder ertüchtigt werden.

Um darüber hinaus auch eine Aussage über die zukünftige Funktionsfähigkeit der Komponente zu erhalten, wird die Komponente oder die äquivalente Probe vorteilhafterweise einer definierten Belastung ausgesetzt, wobei die einer Alterung der Komponente oder Probe um einen vorgebbaren Zeitraum entspricht, und wobei die Kenngröße für die simulierte Alterungsstufe auf Einhaltung eines Grenzwertes überwacht wird. Insbesondere wird als Grenzwert jener Wert vorgegeben und überwacht, der den Zustand der Komponente nach Ablauf der Lebens- oder Betriebszeit, in der Regel nach 40 Jahren, beschreibt. Dazu wird die Komponente oder die Probe, z.B. radiologisch und/oder thermisch, solange definiert belastet, bis der zu überwachende Grenzwert der Kenngröße erreicht ist. Anschließend wird unter störfallnahen Bedingungen der Funktionsparameter bestimmt.

Als Kenngröße wird zweckmäßigerweise eine derartige physikalische Größe bestimmt, die eine auf die Komponente oder die Probe einwirkende Belastung oder eine aus der Belastung resultierende Eigenschaftsänderung charakterisiert. Vorteilhafterweise wird als Kenngröße ein für die Belastung der Komponente relevanter Belastungsparameter und/oder ein für den Alterungszustand (Eigenschaftsänderung) der Komponente relevanter Zustandsparameter ermittelt.

Je nach Art der Komponente oder der Probe können jeweils ein oder mehrere Belastungsparameter oder Zustandsparameter ermittelt werden. Vorteilhafterweise wird als Belastungsparameter die auf die Komponente einwirkende Strahlendosis und/oder Temperatur erfaßt. Sowohl die Strahlendosis als auch die Temperatur sind physikalische Größen, die im unterschiedlichen Ausmaß den Alterungszustand der Komponente beeinflussen.

Als Zustandsparameter wird zweckmäßigerweise eine Materialkenngröße, z.B. die Oberflächenfestigkeit, Temperaturfestigkeit oder Oberflächendichtheit ermittelt. Mittels der Materialkenngröße wird insbesondere die im Laufe der Zeit veränderbare Eigenschaft der Komponente, die den Alterungszustand charakterisiert, erfaßt. Je nach Art der Komponente werden unterschiedliche physikalische Größen für die Oberflächenfestigkeit ermittelt. Beispielsweise wird für die Bestimmung der Oberflächenfestigkeit eines Kabel dessen Reißdehnungsfestigkeit oder für ein Vergußteil die Shorehärte erfaßt. Für eine leittechnische Komponente, z.B. einen Schaltschrank, wird dagegen der Oberflächenwiderstand ermittelt. Darüber hinaus können weitere Zustandsparameter je nach Einsatzart der Komponente verwendet werden, die z.B. deren mechanische oder chemische Eigenschaften charakterisieren.

Vorteilhafterweise kann die Ermittlung des Zustandsparameters entfallen, wenn dessen funktionaler Abhängigkeit von einem Belastungsparameter gegeben ist. Die Störfallfestigkeit der Komponente wird dann zweckmäßigerweise mittels des Belastungsparameters, d.h. Messung der Umgebungsbedingungen der Komponente, ermittelt. Beispielsweise wird der Belastungsparameter als eine Zeitfunktion (Temperatur) oder als Integralwert (Strahlungsdosis) ermittelt.

Die Störfallsimulation wird zweckmäßigerweise getrennt vom eigentlichen Nachweis der Störfallfestigkeit durchgeführt werden. Dazu werden anstelle der in der Kernkraftanlage installierten Komponenten identische Proben oder Prüflinge (Material-, Hersteller- und Typengleichheit) verwendet, die bezüglich des Verhaltens unter den betrieblichen Bedingungen oder Störfallbedingungen identisch sind.

Dabei wird zum einen bei Über- oder Unterschreiten der Kenngröße die Funktionsfähigkeit der Probe ermittelt. Zum anderen wird mittels simulierter Belastungen der Probe in mehreren Stufen oder zu verschiedenen Zeitpunkten die Korrelationsfunktion zwischen der Kenngröße und dem Funktionsparameter zeitlich getrennt und unabhängig vom Nachweis des Erhalts der Störfallfestigkeit der Komponente ermittelt. Die Probe wird solange in mehreren Stufen belastet, bis sie funktionell versagt. In den einzelnen Stufen der Belastungen wird sowohl die Kenngröße als auch der Funktionsparameter erfaßt. Anhand der dabei erfaßten Werte beider Parameter wird die Korrelationsfunktion ermittelt.

Vorteilhafterweise wird die Korrelationsfunktion nur einmalig ermittelt. Insbesondere wird dabei der kritische Wert oder Grenzwert der Kenngröße, insbesondere des Belastungsparameters oder des Zustandsparameters, ermittelt, bis zu welchem die KMV-Störfallfestigkeit der Komponente nachgewiesen ist.

Als Funktionsparameter wird zweckmäßigerweise der Isolationswiderstand der Probe ermittelt. Mittels des Funktionsparameters wird die Funktionsfähigkeit der elektro- und leittechnischen Komponente unter Störfallbelastungen für definierte Zeitpunkte, d.h. für verschiedene Alterungszustände, nachgewiesen. Darüber hinaus können weitere Funktionsparameter, die ebenfalls mit der Kenngröße korrelieren, verwendet werden. Beispielsweise kann als Funktionsparameter auch die Beständigkeit der Komponente gegenüber Wechselspannungsbelastungen ermittelt werden.

Die mit der Erfindung erzielten Vorteile bestehen insbesondere darin, daß mittels einer Kenngröße die Störfallfestigkeit einer elektrischen Komponente oder einer äquivalenten Probe zerstörungsfrei geprüft und ermittelt wird. Bedingt durch die Korrelation der Kenngröße mit dem für die Funktionsfähigkeit der Komponente oder Probe relevanten Funktionsparameter sind kosten- und zeitintensive Prüfverfahren unter störfallnahen Prüfbedingungen weitestgehend vermieden. Darüber hinaus zeichnet sich das Verfahren dadurch aus, daß dieses während des normalen Betriebes der Kernkraftanlage unter normalen Betriebsbedingungen durchgeführt wird. Das Verfahren erlaubt anhand von Messungen der Umgebungsbedingungen Rückschlüsse auf die Funktionsfähigkeit der Komponente in einem Störfall zu ziehen, bei welchem viel höhere Temperaturen, größerer Druck und höhere Feuchtigkeit als bei der Durchführung des Verfahrens herrschen. Diese Rückschlüsse werden beispielsweise dadurch ermöglicht, daß vor der Durchführung des Verfahrens eine hinreichend reproduzierbare Beziehung zwischen der Kenngröße unter Normalbedingungen und dem Funktionsparameter unter Störfallbedingungen für jede einzelne Komponente ermittelt wird. Anhand dieser Beziehung werden gemessenen Werte der Kenngröße oder Betriebskenngröße auf die Werte des Funktionsparameters umgerechnet und miteinander verglichen.

Durch die zerstörungsfreie Überprüfung der entsprechenden Komponenten anhand der ermittelten Kenngröße in gegebenenfalls regelmäßigen Zeitabständen kann die zeitliche Entwicklung der Funktionsfähigkeit der Komponente bestimmt werden.

Vorteilhafterweise werden die entsprechenden Meßdaten gespeichert, so daß frühzeitig eine sich anbahnende Verminderung der Funktionsfähigkeit unter Störfallbedingungen erkannt und entsprechende Gegenmaßnahmen eingeleitet werden können. Wenn die gespeicherten Meßdaten der Kenngröße bei aufeinanderfolgenden Kontrollmessungen beispielsweise deutlich abfallen, weist dies insbesondere bei Überschreiten von kritischen Werten oder Grenzwerten auf eine drohende Funktionsunfähigkeit der untersuchten Komponente hin. Infolgedessen werden geeignete Gegenmaßnahmen getroffen, z.B. werden diese Komponenten ausgetauscht oder ertüchtigt oder unter störfallnahen Bedingungen getestet. Das Verfahren und die eingeleiteten Gegenmaßnahmen bewirken daher ohne eine Beeinträchtigung der Kernkraftanlage eine Erhöhung der Sicherheit dieser Anlage.

Ein Ausführungsbeispiel der Erfindung wird anhand einer Zeichnung näher erläutert. Darin zeigen:
- Figur 1: den zeitlichen Verlauf von zwei Kenngrößen, nämlich eines Belastungs- und eines Zustandsparameters, und
- Figur 2: den funktionalen Verlauf des Zustandsparameters und eines Funktionsparameters in Abhängigkeit von der Belastung.

Einander entsprechende Teile sind in den beiden Figuren mit denselben Bezugszeichen versehen.

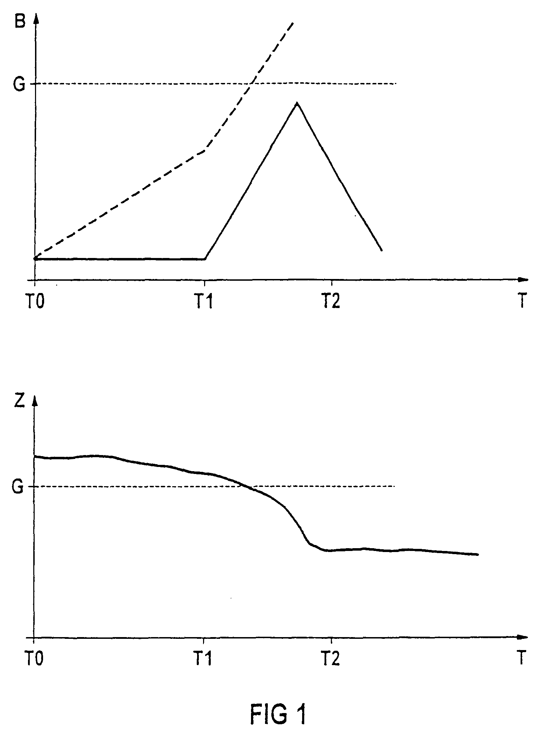

Figur 1 zeigt den funktionalen Verlauf eines Belastungsparameters B, z.B. die auf eine nicht näher dargestellte Komponente oder Probe einwirkende Strahlendosis oder Temperatur, in Abhängigkeit von der Zeit T. Dabei wird die Komponente oder Probe bis zu dem Zeitpunkt T1 normalen Betriebsbedingungen, d.h. normalen Belastungen, und im Zeitbereich zwischen T1 und T2 einer vorübergehend erhöhten Belastung ausgesetzt.

In dem zweiten Diagramm ist ein Zustandsparameter Z der Komponente oder Probe, z.B. die Reißdehnung eines Isoliermaterials eines Kabels, als Funktion der Zeit T dargestellt. Der Zustandsparameter Z weist während normalen Betriebsbedingungen in dem Zeitbereich zwischen T0 und T1 einen dem entsprechenden Alterungszustand der Komponente oder Probe repräsentierenden monotonen Verlauf auf. Insbesondere die vorübergehende Belastung der Komponente in dem Zeitbereich zwischen T1 und T2 wirkt sich auf den Alterungszustand und demzufolge auf den Zustandsparameter Z der Komponente oder Probe besonders aus. Als Zustandsparameter können weitere Materialkenngrößen der Komponente oder Probe, z.B. Temperaturfestigkeit, verwendet werden. Die Erfassung des Zustandsparameters Z kann dabei zyklisch, beispielsweise in Zeitabständen, erfolgen.

Zwischen dem die Funktionsfähigkeit der Komponente charakterisierenden Funktionsparameter F und der Kenngröße (z.B. dem Zustandsparameter Z oder dem Belastungsparameter B) besteht eine Korrelation, die z.B. in einer einmaligen Meßreihe an einer nur für diesen Zweck bestimmten Probe ermittelt werden kann. Die hierfür ausgewählte Probe ist bezüglich Bauart, Material (eventuell sogar Hersteller) möglichst identisch mit der Komponente.

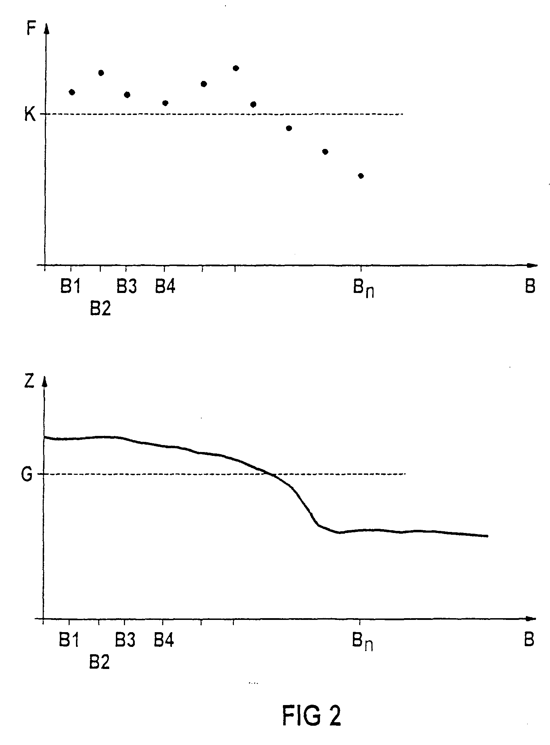

Zur Ermittlung der Korrelationsfunktion zwischen dem Zustandsparameter Z und dem Funktionsparameter F wird die hierfür ausgewählte Probe so lange in mehreren Stufen B1 bis Bn (Figur 2) belastet, bis diese Probe funktionell versagt. In den einzelnen Stufen der Belastungen B1 bis Bn wird der Zustandsparameter Z erfaßt, ein Störfall simuliert und der Wert bestimmt, den der Funktionsparameter F dabei annimmt. Der kritische Wert K des Funktionsparameters F charakterisiert dabei die Funktionsuntüchtigkeit dieser ausgewählten Probe und auch einer anderen Komponente oder Probe mit dem gleichen Wert des Belastungsparameters B oder Zustandsparameters Z. Der mit dem kritischen Wert K des Funktionsparameters F korrelierende Grenzwert G des Zustandsparameters Z wird während des Betriebes der Kernkraftanlage zum Nachweis der Funktionsfähigkeit der Komponente oder Probe herangezogen.

Beim Betrieb der Kernkraftanlage wird zur Überwachung der Funktionsfähigkeit und demzufolge zur Prüfung der Störfallfestigkeit der Komponente der kumulierte Wert einer oder mehrerer Kenngrößen, hier also des Belastungsparameters B (gestrichelt in Diagramm 1, Figur 1, dargestellt) und/oder der Zustandsparameter Z auf das Über- oder Unterschreiten eines zu der jeweiligen Kenngröße gehörenden Grenzwertes G überwacht. Dazu braucht die entsprechende Kenngröße nicht an der im Kraftwerk eingesetzten Komponente selbst gemessen zu werden, vielmehr genügt die Messung an einer äquivalenten, den gleichen Bedingungen ausgesetzten Probe.

Die Überwachung des Belastungsparameters B oder des Zustandsparameters Z kann z.B. zyklisch oder fortlaufend erfolgen. Die jeweiligen Werte des Belastungsparameters B oder des Zustandsparameters Z werden mit dem entsprechenden Grenzwert G des Belastungsparameters B bzw. des Zustandsparameters Z verglichen. Solange keine der Kenngrößen ihren Grenzwert G erreicht, ist die Störfallfestigkeit der Komponente gegenüber singulären Belastungen, z.B. gegenüber einem Kühlmittelverluststörfall, gegeben. Somit wird die Störfallfestigkeit der Komponente geprüft, indem überwacht wird, daß der jeweilige funktionale Verlauf des Zustandsparameters Z und/oder des Belastungsparameters B innerhalb zugelassener Toleranzbereiche bleibt.

Mittels der Überwachung eines zusätzlich zu dem Grenzwert G vorgebbaren Grenzwerts G' der Kenngröße während eines definierten Belastungsprozesses der Komponente ist besonders vorteilhaft ein definiertes Voraltern der Komponente oder Probe ermöglicht. Dabei wird die Komponente oder Probe, z.B. radiologisch oder thermisch, definiert belastet. Diese Belastung entspricht einer Alterung der Komponente oder Probe um einen vorgebbaren Zeitraum. Die Kenngröße wird dabei auf Einhaltung des die simulierte Alterungsstufe charakterisierenden Grenzwertes G' überwacht.

Bei Unter- oder Überschreiten des Grenzwertes G oder G' wird zum Nachweis der Funktionsfähigkeit und demzufolge zur Prüfung der Störfallfestigkeit nicht mehr die mit dem Funktionsparameter F korrelierte Kenngröße herangezogen, sondern der Funktionsparameter F der Probe oder der Komponente wird unter störfallnahen Bedingungen ermittelt. Je nach Alterungszustand der Komponente oder Probe sowie in Abhängigkeit von ihrer singulären Belastung unterschreitet der Funktionsparameter F den kritischen Wert K, d.h. die Störfallfestigkeit der Komponente oder Probe ist nicht mehr gegeben. Bei diesem Ausführungsbeispiel wird der Funktionsparameter zu zwei verschiedenen Anwendungen ermittelt: Die Korrelation zwischen der Kenngröße und dem Funktionsparameter F wird an einer ausgewählten Probe ermittelt, um den Grenzwert G festzulegen; und der Funktionsparameter F wird anstelle der Kenngröße an der Komponente oder einer äquivalenten Probe ermittelt, wenn die Kenngröße ihren Toleranzbereich verlassen hat. Bei einer anderen Variante wird anstelle der Ermittlung des Funktionsparameters F die Komponente bereits beim Überschreiten oder Unterschreiten des Grenzwerts G der Kenngröße ausgetauscht oder ertüchtigt, um ihre Funktionsfähigkeit wieder herzustellen.

## Patentansprüche

1. Verfahren zur zerstörungsfreien Prüfung der Störfallfestigkeit einer elektrischen Komponente einer Kernkraftanlage, bei dem zuerst unter störfallnahen Bedingungen für mindestens eine die integrale Belastung der Komponente widerspiegelnde Kenngröße, die mit einem für die Funktionsfähigkeit der Komponente relevanten Funktionsparameter korreliert, ein mit einem kritischen Wert des Funktionsparameters korrelierender Grenzwert ermittelt wird, und bei dem anschließend die Kenngröße beim Betrieb der Komponente erfaßt wird und die Prüfung der Störfallfeatigkeit vorgenommen wird, indem die Kenngröße auf Einhaltung des Grenzwertes überwacht wird.

2. Verfahren nach Anspruch 1, **dadurch gekenn- zeichnet, daß** als Kenngröße ein für die Belastung der Komponente relevanter Belastungeparameter herangezogen wird.

3. Verfahren nach Anspruch 2, **dadurch gekenn- zeichnet, daß** als Belastungsparameter die auf die Komponente einwirkende Strahlendosis und/oder Temperatur herangezogen wird.

4. Verfahren nach einem der vorangehenden Ansprüche, **dadurch gekennzeichnet, daß** als Kenngröße ein für den Alterungszustand der Komponente relevanter Zustandsparameter herangezogen wird.

5. Verfahren nach Anspruch 4, **dadurch gekenn- zeichnet, daß** als Zustandsparameter eine Materialkenngröße der Komponente herangezogen wird.

6. Verfahren nach einem der vorangehenden Ansprüche, **dadurch gekennzeichnet, daß** als Funktionsparameter der Isolationswiderstand der Komponente herangezogen wird.

7. Verfahren nach einem der vorangehenden Ansprüche, **dadurch gekennzeichnet, daß** die Kenngröße an einer zur Komponente äquivalenten Probe erfaßt und/oder überwacht wird.

8. Verfahren nach einem der vorangehenden Ansprüche, **dadurch gekennzeichnet, daß** die Komponente oder eine äquivalente Probe einer definierten Belastung ausgesetzt wird, wobei diese Belastung einer Alterung der Komponente bzw. der Probe um einen vorgebbaren Zeitraum entspricht, und daß die Kenngröße auf Einhaltung eines die simulierte Alterungsstufe charakterisierenden Grenzwertes überwacht wird.

## Claims

1. Method for non-destructive testing of the defect susceptibility of an electrical component in a nuclear power station, in which a limit value which is correlated with a critical value of a function parameter is first of all determined in conditions which are close to a defect for at least one characteristic variable which reflects the integral load on the component and is correlated with the function parameter which is relevant for the serviceability of the component, and in which the characteristic variable is then recorded during operation of the component and the test for defect susceptibility is carried out by monitoring the characteristic variable for compliance with the limit value.

2. Method according to Claim 1, **characterized in that** a load parameter which is relevant for the load on the component is used as the characteristic variable.

3. Method according to Claim 2, **characterized in that** the radiation dose and/or temperature acting on the component are/is used as the load parameter or parameters.

4. Method according to one of the preceding claims, **characterized in that** a state parameter which is relevant for the ageing state of the component is used as the characteristic variable.

5. Method according to Claim 4, **characterized in that** a material characteristic variable of the component is used as the state parameter.

6. Method according to one of the preceding claims, **characterized in that** the insulation resistance of the component is used as the function parameter.

7. Method according to one of the preceding claims, **characterized in that** the characteristic variable is recorded and/or monitored on a sample which is equivalent to the component.

8. Method according to cne of the preceding claims, **characterized in that** the component or an equivalent sample is subjected to a defined load, with this load corresponding to ageing of the component or of the sample over a predetermineable time period, and **in that** the characteristic variable is monitored for compliance with a limit value which characterizes the simulated ageing stage.

## Revendications

1. Procédé de contrôle non destructif de la résistance aux incidents d'un composant électrique d'une centrale nucléaire, dans lequel on détermine d'abord, dans des conditions proches de l'incident, pour au moins une grandeur caractéristique reflétant la charge intégrale du composant et corrélée à un paramètre fonctionnel pertinent pour l'aptitude à fonctionner du composant, une valeur limite se corrélant à une valeur critique du paramètre de fonctionnement et dans lequel on détecte ensuite la grandeur caractéristique lorsque le composant fonctionne et on effectue le contrôle de la résistance à un incident en surveillant que la grandeur caractéristique respecte la valeur limite.

2. Procédé suivant la revendication 1, **caractérisé en ce que** l'on tire parti, comme grandeur caractéristique, d'un paramètre de charge pertinent pour la charge du composant.

3. Procédé suivant la revendication 2, **caractérisé en ce que** l'on tire parti, comme paramètre de charge, de la dose de rayonnement agissant sur le composant et/ou de la température.

4. Procédé suivant l'une des revendications précédentes, **caractérisé en ce que** l'on tire parti, comme grandeur de charge, d'un paramètre d'état pertinent pour l'état de vieillissement du composant.

5. Procédé suivant la revendication 4, **caractérisé en ce que** l'on tire parti, comme paramètre d'état, d'une grandeur caractéristique du matériau du composant.

6. Procédé suivant l'une des revendications précédentes, **caractérisé en ce que** l'on tire parti, comme paramètre de fonctionnement, de la résistance d'isolement du composant.

7. Procédé suivant l'une des revendications précédentes, **caractérisé en ce que** l'on détecte et/ou on surveille la grandeur caractéristique sur un échantillon équivalent au composant.

8. Procédé suivant l'une des revendications précédentes, **caractérisé en ce que** l'on soumet le composant ou un échantillon équivalent à une charge définie, cette charge correspondant à un vieillissement du composant ou de l'échantillon d'un laps de temps qui peut être prescrit et **en ce que** l'on surveille que la grandeur caractéristique respecte une valeur limite caractérisant le stade de vieillissement simulé.
